## Europäisches Patentamt

## European Patent Office

## Office européen des brevets

(11) Publication number: **0 244 067**
**B1**

## EUROPEAN PATENT SPECIFICATION

(45) Date of publication of the patent specification:
13.06.90

(51) Int. Cl.⁵: **F16C 1/22**

(21) Application number: 87302068.9

(22) Date of filing: 11.03.87

(54) Manual adjust core terminal.

(30) Priority: 28.04.86 US 856495

(43) Date of publication of application:
04.11.87 Bulletin 87/45

(45) Publication of the grant of the patent:
13.06.90 Bulletin 90/24

(84) Designated Contracting States:
DE FR GB IT

(56) References cited:
FR-A- 2 111 125
GB-A- 2 069 090
US-A- 3 572 160
US-A- 3 665 784
US-A- 3 744 339
US-A- 4 294 133

(73) Proprietor: TELEFLEX INCORPORATED, 155 S. Limerick
Road, Limerick Pennsylvania 19468(US)

(72) Inventor: Niskanen, Don L., 13998 Sunset Street, Livonia
Michigan 48154(US)
Inventor: Spease, Arthur L., 15456 Fairlane Street,
Livonia,§Michigan 48154(US)

(74) Representative: Walters, Frederick James et al,
Urquhart-Dykes & Lord 91 Wimpole Street, London
W1M 8AH(GB)

ACTORUM AG

## Description

### TECHNICAL FIELD

This invention relates to flexible motion transmitting remote control assembly of the type transmitting motion in a curved path by a flexible motion transmitting core element moveably supported by a flexible conduit.

### BACKGROUND OF THE INVENTION

Remote control assemblies of the instant type are used in aircraft, automotive, and marine environments. Typical of the use of such remote control assemblies is the positioning of heater and vent control members in automobiles.

In such applications it is frequently desirable to adjust the length or position of the end of the core element once the assembly has been installed. Such assemblies normally include one or more fittings secured to the conduit for attaching the conduit to the support structure of the automobile and the core element is attached to one end of the core element and is adapted to be attached to a member to be controlled whereas the other end has a manually graspable knob secured thereto for longitudinally moving the core element. Frequently, after the assembly has been installed, it is desirable to adjust the overall effective length of the core element at the terminal end attached to the member to be controlled to a particular position.

### DESCRIPTION OF THE PRIOR ART

A prior art assembly directed to a solution of this problem is shown in U.S. Patent No. 3 665 784. This patent discloses a self-adjust terminal member wherein the effective length of the core element is adjusted at the terminal means in response to a predetermined force applied to the knob end of the core element. This system, however, does not allow the terminal means to be manually locked into any one of various adjusted positions to thereby adjust the overall length of the core element to a desired length. Also, once this prior art terminal means has been installed, it can not easily be unlocked and readjusted.

### SUMMARY AND ADVANTAGES OF THE INVENTION

The present invention provides a motion transmitting remote control assembly comprising a conduit a motion transmitting core element movable longitudinally within said conduit to thereby transmit motion, a terminal means attached to said core element for adjusting the position of attachment to a control member longitudinally of the axis of said core element and locking same in any one of various said adjusted positions therealong, said terminal means comprising a first member attached to said core element, a second member adapted for attachment to a control member and interconnecting means interconnecting said first and second members. The assembly is characterised in that said interconnecting means comprises a third member interconnecting said first and second members and manually movable between an unlocked position allowing relative movement between the first and second members along said axis and a locked position for preventing said relative movement between said first and second members.

Accordingly, the advantages of the present invention are to provide a remote control assembly including a motion transmitting core element movably supported by a conduit with a terminal means capable of being manually locked into any one of various positions to adjust the effect length of the core element to any desired length, and which can easily be unlocked and readjusted.

### BRIEF DESCRIPTION OF THE DRAWINGS

Other advantages of the present invention will be readily appreciated as the same becomes better understood by reference to the following detailed description when considered in connection with the accompanying drawings wherein:

FIGURE 1 is a side elevational view of the preferred embodiment of the instant invention;

FIGURE 2 is a bottom view taken substantially along line 2-2 of Figure 1;

FIGURE 3 is an end view taken substantially along line 3-3 of Figure 1;

FIGURE 4 is a cross-sectional view taken substantially along line 4-4 of Figure 1;

FIGURE 5 is cross-sectional view taken substantially along line 5-5 of Figure 1; and

FIGURE 6 is a cross-sectional view taken substantially along line 6-6 of Figure 5.

### DESCRIPTION OF THE PREFERRED EMBODIMENT

Referring now to the drawings, a preferred embodiment of a motion transmitting remote control assembly constructed in accordance with the instant invention is generally shown at 10. The assembly includes a conduit 12 and a motion transmitting core element 14 which is movably supported by the conduit 12. Also, a fitting 16 is secured to the conduit and is adapted for attachment to the support structure by a flange 18 having a hole 20 therein. Normally a fitting 16 will be disposed at each end of the conduit 12. The conduit 12 is preferably of the well known type utilized in remote control assemblies and including an inner tubular member of organic polymeric material surrounded by a plurality of filaments or long lay wires disposed on a long lead and encased in an outer jacket of organic polymeric material. The organic polymeric materials may be of the various well known plastics such as polyethylene, etc. Additionally, the fitting 16 is preferably of organic polymeric material and disposed about the conduit 12.

The assembly includes a terminal means generally indicated at 22 for normally moving with the core element 14 in response to a force that is applied parallel to the longitudinal axis of the core element 14. The terminal means 22 is attached to the core element 14 for adjusting the position of attachment to a control member longitudinally of the axis of the core element 14 and for manually locking same in any one of various of the adjusted positions therealong. More specifically, the terminal means 22 includes a first member 24, a second member 26, and a third member 28. The first member 24 is molded about the terminal end of the core element 14. The first member 24 is generally rectangular in shape and includes sides with a front face 30 and a rear face 32, defining an elongated opening 34.

The second member 26 is slideably disposed within the elongated opening 34 of the first member 24. The second member 26 contains a cylindrical hole 36 for receiving a control member (not shown), i.e., the second member is adapted by the hole 36 for attachment to a control member. The second member 26 further contains tab portions 38 slideably engaging the raised ridge 40 on the rear face 32 of the first member 24 on opposite sides of the opening 34. The raised ridge 40 surrounds the elongated opening 34 on the rear face 30 of the first member 24. The second member 26, further contains a generally T-shaped head 42. The third member 28 interconnects the first and second members 24, 26 and is movable between an unlocked position allowing relative movement between the first and second members 24 and 26 along the axis of the core element 14 and a locked position for preventing such relative movement between the first and second members 24 and 26. The third member 28 has a generally C-shaped cross-section which defines a channel 44. The T-shaped head 42 of the second member 26 is slideably disposed within the channel 44 defined by the third member 28.

The terminal means 22 includes locking teeth 46 for selectively coacting between the first and third members 24 and 28. The first and third members 24 and 28 include a plurality of teeth 46. Opposite sides of the opening 34 on the front face 30 of the first member 24 contain a plurality of locking teeth 46. The bottom portion 48 of the third member 28 contains at least one row of such teeth 46 for locking the third member 28 with the first member 24, and at least one smooth surface 50 for allowing the third member 28 to slide relative to the first member 24. The smooth surface 50 allows the third member 28 to slide over the row of locking teeth 46 on the front face 30 of the first member 24. The first and third members 24, 28 are locked into place when the teeth 46 on the bottom portion 48 of the third member 28 are slid into locking engagement with the teeth 46 on the front face 30 of the first member 24. In this position, the teeth 46 on the bottom portion 48 of the third member 28 are in meshing engagement with at least some of the teeth 46 on the front face 30 of the first member 24 when in the locked position. This engagement prevents relative motion between the first member 24 and the second member 26 in the direction parallel to the longitudinal axis of the core element 14.

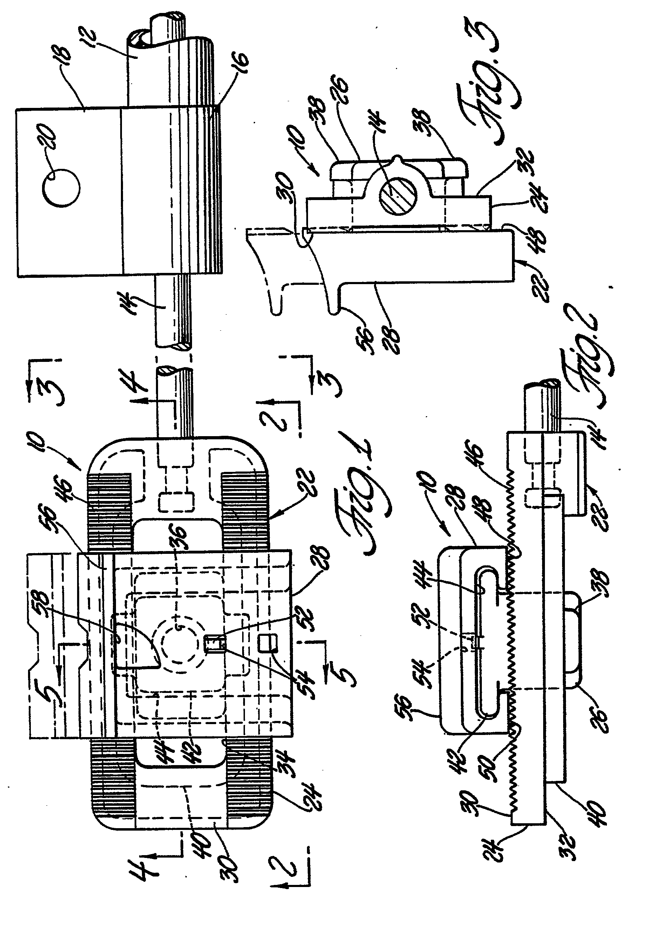

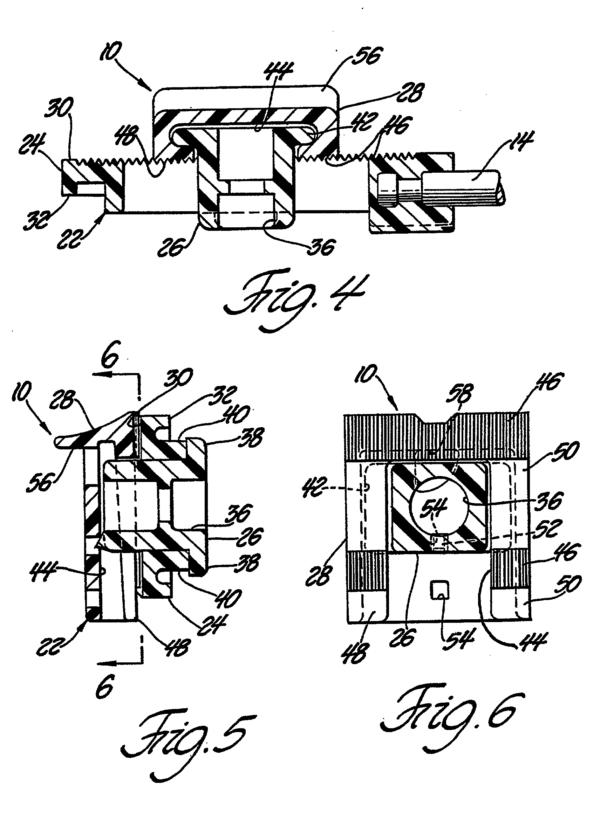

The terminal means includes a latching means for preventing relative movement between the second member 26 and the third member 28 in a direction transverse to the longitudinal direction of the core element 14. The latching means includes a projection or tab 52 on the T-shaped head 42 of the second member 26, and at least one hole 54 through the third member 28. The latching means provides two positions. When the latching means is in the first position (as shown in Phantom lines Figures 1 and 3), the first member 24 and the third member are in slideable engagement. When the latching means is in the second position (as shown in solid lines Figures 1 and 3), the first member and the third member 28 are in locking engagement.

The third member 28 includes a lip 56, to which a force in a direction transverse to the direction of motion of the core element 14 can be applied for moving the third member 28 to the locked position. The third member 28 also includes a hole 58 adjacent the lip 56 for receiving a screwdriver (not shown) to which a force can be applied transversely to the longitudinal axis of the core element 14 for moving the third member 28 between the locked positions. The screwdriver may be rotated to unlock the third member by forcing it to move transversely to the longitudinal axis of the core element 14.

In operation, the remote control assembly 10 is installed by attaching a fitting such as that shown at 16 to a support structure and attaching the terminal means 22 to a member to be controlled (not shown) by disposing the member in the hole 36. In many of the assemblies, the opposite end of the core element 14 will have a knob attached thereto for manually longitudinally moving the flexible metal wirelike core element 14. When the assembly 10 is installed, the latching means is in the first position (shown in Phantom in Figures 1 and 3) and provides for relative motion between the first member 24 and the second member 26 in the direction parallel to the longitudinal axis of the core element 14. The knob at the opposite end is then positioned to where the operator desires. The latching means is then moved to lock the third member 28 and the first member 24 and thereby prevent relative motion between the first member 24 and the second member 26 by manually applying a force transversely to the longitudinal axis of the core element 14 on the lip 56 of the third member 28. Once the adjustment has been made, the member to be controlled (not shown), which is disposed in the hole 36, may move back and forth without relative motion between the first member 24 and the second member 26.

Unlocking the terminal means 22, providing for further adjustment of the overall effective length of the core element 14 is accomplished by inserting a screwdriver in the hole 58 and applying a force transversely to the longitudinal axis of the core element 14. This provides for relative movement between the third member 28 and the second member 26 to thereby adjust the second and third members 24 and 26 between the latched and unlatched positions. Once the terminal means 22 has been unlocked, an adjustment on the overall effective length of the core element 14 can be made by repeating the steps illustrated above.

**Claims**

1. A motion transmitting remote control assembly (10) comprising a conduit (12), a motion transmitting core element (14) movable longitudinally within said conduit (12) to thereby transmit motion, a terminal means (22) attached to said core element (14) for adjusting the position of attachment to a control member longitudinally of the axis of said core element (14) and locking same in any one of various said adjusted positions therealong said terminal means (22) comprising a first member (24) attached to said core element (14), a second member (26) adapted for attachment to a control member and interconnecting means interconnecting said first and second members (24, 26) characterised in that said interconnecting means comprises a third member (28) interconnecting said first and second members (24, 26) and manually movable between an unlocked position allowing relative movement between the first and second members (24, 26) along said axis and a locked position for preventing said relative movement between said first and second members (24, 26).

2. An assembly as set forth in claim 1 further characterized by including locking teeth (46) for selectively coacting between said first and third members (24, 28).

3. An assembly as set forth in claim 2 further characterized by said first and third members (24, 28) including a plurality of such teeth (46).

4. An assembly as set forth in claim 3 further characterized by said locking teeth (46) of said third member (28) being in meshing engagement with at least some of said teeth (46) of said first member (24) in said locked position.

5. An assembly as set forth in claim 4 further characterized by said third member (28) including a lip (56) to which a force in a direction transverse to the direction of motion of said core element (14) can be applied for moving said third member (28) to said locked position.

6. An assembly as set forth in claim 5 further characterized by said second member (26) including a cylindrical hole (36) therethrough for receiving the control member.

7. An assembly as set forth in claim 6 further characterized by including a latching means for preventing relative movement between said second and third members (26, 28) in a direction transverse to the longitudinale axis of said core element (14).

8. An assembly as set forth in claim 7 further characterized by said latching means comprising a projection (52) on said second member (26) and at least one hole (54) through said third member (28).

9. An assembly as set forth in claim 8 further characterized by said third member (28) having a C-shaped cross-section defining a channel (44).

10. An assembly as set forth in claim 9 further characterized by said second member (26) including a generally T-shaped head (42) slideably disposed within said channel (44) of said third member (28).

11. An assembly as set forth in claim 10 further characterized by said first member (24) including an elongated opening (34) therein.

12. An assembly as set forth in claim 11 further characterized by said first member (24) including front and rear faces (30, 32) with said opening (34) extending therebetween.

13. An assembly as set forth in claim 12 further characterized by said locking teeth (46) of said first member (24) being on opposite sides of said opening (34) on said front face (30) of said first member (24).

14. An assembly as set forth in claim 13 further characterized by said second member (26) containing tab portions (38) slideably engaging said rear face (32) of said first member (24) on opposite sides of said opening (34) of said first member (24).

15. An assembly as set forth in claim 14 including a raised ridge (40) surrounding said opening (34) on said rear face (32) of said first member (24), said tab portions (38) being in sliding engagement with said raised ridge (40).

16. An assembly as set forth in claim 15 further characterized by said third member (28) including bottom portions (48) with at least one row of said teeth (46) for locking said third member (28) with said first member (24).

17. An assembly as set forth in claim 16 further characterized by said bottom portions (48) including at least one smooth section (50) for allowing said third member (28) to slide relative to said first member (24).

18. An assembly as set forth in claim 17 further characterized by said third member (28) including a hole (58) therethrough for receiving a screwdriver to which a force can be applied transversely to the longitudinal axis of said core element (14) for moving said third member (28) between said locked positions.

**Patentansprüche**

1. Fernbedienungsvorrichtung (10) mit einer Leitung (12), einem eine Bedienung oder Bewegung übertragenden Kernelement (14), welches in der Leitung (12) in Längsrichtung beweglich ist, um eine Bedienung oder Bewegung zu übertragen, einem an dem Kernelement (14) befestigten Anschlußmittel (22), mit dem die Position der Befestigung an einem Kontrollteil längs der Achse des Kernelements (14) eingestellt und seine Verriegelung in jeder von mehreren entlang desselben eingestellten Positionen vorgenommen wird, wobei das Anschlußmittel (22) ein an dem Kernelement (14) befestigtes erstes Teil (24), ein zur Befestigung an einem Kontrollteil geeignetes zweites Teil (26) und ein das erste und das zweite Teil (24, 26) miteinander verbindendes Verbindungsmittel aufweist, dadurch gekennzeichnet, daß das Verbindungsmittel ein das erste und das zweite Teil (24, 26) miteinander verbindendes drittes Teil (28) umfasst, welches von Hand zwischen einer unverriegelten Position, in der entlang der Achse eine Relativbewegung zwischen dem ersten und dem zweiten Teil (24, 26) möglich ist, und einer verriegelten Position beweglich ist, um die Relativbewegung zwischen dem ersten und dem zweiten Teil (24, 26) zu verhindern.

2. Vorrichtung nach Anspruch 1, dadurch gekennzeichnet, daß Verriegelungszähne (46) für ein wahlweises Zusammenwirken zwischen dem ersten und dem dritten Teil (24, 28) vorgesehen sind.

3. Vorrichtung nach Anspruch 2, dadurch gekennzeichnet, daß das erste und das dritte Teil (24, 28) eine Vielzahl solcher Zähne (46) aufweisen.

4. Vorrichtung nach Anspruch 3, dadurch gekennzeichnet, daß die Verriegelungszähne (46) des dritten Teils (28) in der verriegelten Position mit wenigstens einem der Zähne (46) des ersten Teils (24) im Eingriff sind.

5. Vorrichtung nach Anspruch 4, dadurch gekennzeichnet, daß das dritte Teil (28) eine Lippe (56) aufweist, auf welche eine Kraft in einer Richtung quer zu der Bewegungsrichtung des Kernelements (14) ausgeübt werden kann, um das dritte Teil (28) in die verriegelte Position zu bewegen.

6. Vorrichtung nach Anspruch 5, dadurch gekennzeichnet, daß das zweite Teil (26) ein zylindrisches Durchgangsloch (36) zur Aufnahme des Kontrollteils aufweist.

7. Vorrichtung nach Anspruch 6, dadurch gekennzeichnet, daß zum Verhindern der Relativbewegung zwischen dem zweiten und dem dritten Teil (26, 28) in einer Richtung quer zu der Längsachse des Kernelements (14) ein Einschnappmittel vorgesehen ist.

8. Vorrichtung nach Anspruch 7, dadurch gekennzeichnet, daß das Einschnappmittel mit einem Vorsprung (52) an dem zweiten Teil (26) und wenigstens einem Durchgangsloch (54) an dem dritten Teil (28) ausgebildet ist.

9. Vorrichtung nach Anspruch 8, dadurch gekennzeichnet, daß das dritte Teil (28) einen C-förmigen Querschnitt zur Ausbildung einer Rinne (44) aufweist.

10. Vorrichtung nach Anspruch 9, dadurch gekennzeichnet, daß das zweite Teil (26) einen im wesentlichen T-förmigen Kopf (42) aufweist, der in der Rinne (44) des dritten Teils (28) verschieblich angeordnet ist.

11. Vorrichtung nach Anspruch 10, dadurch gekennzeichnet, daß das erste Teil (24) eine längliche Öffnung (34) aufweist.

12. Vorrichtung nach Anspruch 11, dadurch gekennzeichnet, daß das erste Teil (24) vordere und hintere Stirnseiten (30, 32) aufweist, zwischen denen sich die Öffnung (34) erstreckt.

13. Vorrichtung nach Anspruch 12, dadurch gekennzeichnet, daß die Verriegelungszähne (46) des ersten Teils (24) an den gegenüberliegenden Seiten der Öffnung (34) an der vorderen Stirnseite (30) des ersten Teils (24) vorgesehen sind.

14. Vorrichtung nach Anspruch 13, dadurch gekennzeichnet, daß das zweite Teil (26) Lappenbereiche (38) aufweist, die an den gegenüberliegenden Seiten der Öffnung (34) des ersten Teils (24) die hintere Stirnseite (32) des ersten Teils (24) verschieblich beeinflussen.

15. Vorrichtung nach Anspruch 14, dadurch gekennzeichnet, daß eine erhabene Rippe (40) die Öffnung (34) an der hinteren Stirnseite (32) des ersten Teils (24) umgibt und daß die Lappenbereiche (38) mit dieser erhabenen Rippe (40) in einer gleitenden Berührung gehalten sind.

16. Vorrichtung nach Anspruch 15, dadurch gekennzeichnet, daß das dritte Teil (28) Bodenbereiche (48) mit wenigstens einer Reihe von Zähnen (46) zum Verriegeln des dritten Teils (28) mit dem ersten Teil (24) aufweist.

17. Vorrichtung nach Anspruch 16, dadurch gekennzeichnet, daß die Bodenbereiche (48) wenigstens einen glatten Abschnitt (50) aufweisen, an welchem das dritte Teil (28) relativ zu dem ersten Teil (24) gleiten kann.

18. Vorrichtung nach Anspruch 17, dadurch gekennzeichnet, daß das dritte Teil (28) ein Durchgangsloch (58) zur Aufnahme eines Schraubenziehers aufweist, mit dem eine Kraft quer zu der Längsachse des Kernelements (14) ausgeübt werden kann, um das dritte Teil (28) zwischen den verriegelten Positionen zu bewegen.

**Revendications**

1. Dispositif de commande à distance de transmission de mouvement (10) comprenant un conduit (12), un élément de noyau ou tronçon de transmission de mouvement (14) pouvant se déplacer longitudinalement à l'intérieur du conduit (12) pour transmettre ainsi le mouvement, des moyens d'extrémité (22) fixés à l'élément de noyau ou tronçon (14) pour régler la position de fixation à un élément de commande dans le sens longitudinal de l'axe de l'élément de noyau ou tronçon (14) et pour verrouiller cet élément de commande dans l'une quelconque des différentes positions de réglage le long de l'axe, ces moyens d'extrémité (22) comprenant un premier élément (24) fixé à l'élément de noyau ou tronçon (14), un second élément (26) destiné à être fixé à un élément de commande, et des moyens de liaison reliant les premier et second éléments de commande (24, 26), dispositif caractérisé en ce que les moyens de liaison comprennent un troisième élément (28) reliant le premier et second élément (24, 26) et pouvant être déplacé manuellement entre une position de déverrouillage permettant le mouvement relatif entre le premier et second élément (24, 26), le long de l'axe, et une position de verrouillage destinée à empêcher ce mouvement relatif entre le premier et second élément (24, 26).

2. Dispositif selon la revendication 1, caractérisé en outre en ce qu'il comprend des dents de verrouillage (46) destinées à coopérer sélectivement entre le premier et troisième élément (24, 28).

3. Dispositif selon la revendication 2, caractérisé en outre en ce que le premier et troisième élément (24, 28) comprend un certain nombre des dents (46).

4. Dispositif selon la revendication 3, caractérisé en outre en ce que les dents de verrouillage (46) du troisième élément (28) sont en prise avec certaines au moins des dents (46) du premier élément (24) dans la position de verrouillage.

5. Dispositif selon la revendication 4, caractérisé en outre en ce que le troisième élément (28) comprend une lèvre (56) à laquelle on peut appliquer une force dirigée dans une direction transversale par rapport à la direction de mouvement de l'élément de noyau (14), pour déplacer ce troisième élément (28) vers la position de verrouillage.

6. Dispositif selon la revendication 5, caractérisé en outre en ce que le second élément (26) est percé d'un trou cylindrique (36) pour recevoir l'élément de commande.

7. Dispositif selon la revendication 6, caractérisé en outre en ce qu'il comprend un dispositif de verrouillage destiné à empêcher le mouvement relatif entre le second et troisième élément (26, 28) dans une direction transversale par rapport à l'axe longitudinal de l'élément de noyau (14).

8. Dispositif selon la revendication 7, caractérisé en outre en ce que le dispositif de verrouillage comprend une projection (52) formée sur le second élément (26) et au moins un trou (54) percé dans le troisième élément (28).

9. Dispositif selon la revendication 8, caractérisé en outre en ce que le troisième élément (28) présente une section transversale en forme de C définissant un passage (44).

10. Dispositif selon la revendication 9, caractérisé en outre en ce que le second élément (26) comprend une tête en forme générale de T (42) montée en glissement à l'intérieur du passage (44) du troisième élément (28).

11. Dispositif selon la revendication 10, caractérisé en outre en ce que le premier élément (24) est percé d'une ouverture allongée (34).

12. Dispositif selon la revendication 11, caractérisé en outre en ce que le premier élément (24) comprend des faces avant et arrière (30, 32) entre lesquelles se trouve l'ouverture (34).

13. Dispositif selon la revendication 12, caractérisé en outre en ce que les dents de verrouillage (46) du premier élément (24) sont situées sur les côtés opposés de l'ouverture (34) de la face avant (30) du premier élément (24).

14. Dispositif selon la revendication 13, caractérisé en outre en ce que le second élément (26) comprend des parties de languettes (38) pouvant venir en contact de glissement avec la face arrière (32) du premier élément (24) sur les côtés opposés de l'ouverture (34) du premier élément (24).

15. Dispositif selon la revendication 14, caractérisé en ce qu'il comprend une arète en saillie (40) entourant l'ouverture (34) de la face arrière (32) du premier élément (24), les parties de languettes (38) étant en contact de glissement avec cette arète en saillie (40).

16. Dispositif selon la revendication 15, caractérisé en outre en ce que le troisième élément (28) comprend des parties inférieures (48) munies d'au moins une rangée de dents (46) pour verrouiller ce troisième élément (28) avec le premier élément (24).

17. Dispositif selon la revendication 16, caractérisé en outre en ce que les parties inférieures (48) comprennent au moins une partie lisse (50) pour permettre au troisième élément (28) de glisser par rapport au premier élément (24).

18. Dispositif selon la revendication 17, caractérisé en outre en ce que le troisième élément (28) est percé d'un trou (58) destiné à recevoir un tournevis auquel une force peut être appliquée transversalement par rapport à l'axe longitudinal de l'élément de noyau (14) pour déplacer le troisième élément (28) entre les positions de verrouillage.

EP 0 244 067 B1

*Fig. 4*

*Fig. 5*

*Fig. 6*